# EUROPÄISCHE PATENTANMELDUNG

(11) **EP 1 571 043 A2**
(43) Veröffentlichungstag der Anmeldung: **07.09.2005**
(21) Anmeldenummer: 05003102.0
(22) Anmeldetag: 14.02.2005
(51) Int. Cl.: B60R 7/04, B60R 7/06

(54) **Konsolenbauteil für ein Kraftfahrzeug**

(30) Priorität: 03.03.2004 DE 202004003473 U
(71) Anmelder: ETG Elastomer Technik Gedern GmbH, 63688 Gedern (DE)
(72) Erfinder: Dietz, Matthias, 63628 Bad Soden-Salmünster (DE)
(74) Vertreter: von den Steinen, Axel

(57) **Zusammenfassung**

Die Erfindung betrifft ein Konsolenbauteil (01) zur Anordnung in einer formkomplementären Aufnahme eines Kraftfahrzeugs, insbesondere in einer Fahrzeugkonsole, in einem Handschuhfach oder in einem Ablagefach, wobei das Konsolenbauteil (01) einen Kern (05) aus einem formstabilen Material aufweist, der mit einer elastisch verformbaren Deckschicht (06) aus einem weicheren Material bereichsweise bedeckt oder ummantelt ist.

## Beschreibung

Die Erfindung betrifft ein Konsolenbauteil zur Anordnung in einer formkomplementären Aufnahme eines Kraftfahrzeugs nach dem Oberbegriff des Anspruchs 1.

Gattungsgemäße Konsolenbauteile sind aus der Fahrzeugtechnik bekannt und in vielen modernen Autos vorgesehen. Die Konsolenbauteile werden dabei in einer formkomplementären Aufnahme des Kraftfahrzeugs eingelegt und können dadurch in einfacher Weise wieder herausgenommen werden. Beispielsweise werden derartige Konsolenbauteile in Fahrzeugkonsolen, Handschuhfächern oder Ablagefächern eingelegt. Sind die Konsolenbauteile herausnehmbar, so bieten sie dem Benutzer den Vorteil, dass durch die Herausnahme das Konsolenbauteil außerhalb der Aufnahme einfach gereinigt werden kann. Außerdem ist auch der Austausch des Konsolenbauteils sehr einfach möglich.

Hinsichtlich der Materialauswahl zur Herstellung gattungsgemäßer Konsolenbauteile besteht ein Zielkonflikt. Zum einen sollen die Konsolenbauteile eine möglichst weiche Oberfläche aufweisen, um dadurch eine gute Haptik und eine gute Anformung in der formkomplementären Aufnahme des Kraftfahrzeugs zu gewährleisten. Dem entgegen steht der Wunsch nach möglichst großer Formstabilität des Konsolenbauteils, damit dieses auch vor dem Einlegen in der Aufnahme des Kraftfahrzeugs, insbesondere während des Montageprozesses, prozesssicher gehandhabt werden kann. Bei der Auswahl der Materialien zur Herstellung gattungsgemäßer Konsolenbauteile musste deshalb bisher ein Kompromiss zwischen Formstabilität und Anformbarkeit eingegangen werden.

Ausgehend von diesem Stand der Technik ist es deshalb Aufgabe der vorliegenden Erfindung, ein neues Konsolenbauteil zur Anordnung in einer formkomplementären Aufnahme eines Kraftfahrzeugs vorzuschlagen, das die Nachteile des vorbekannten Stands der Technik vermeidet.

Diese Aufgabe wird durch ein Konsolenbauteil nach der Lehre des Anspruchs 1 gelöst.

Vorteilhafte Ausführungsformen der Erfindung sind Gegenstand der Unteransprüche.

Das erfindungsgemäße Konsolenbauteil beruht auf dem Grundgedanken, dass das Konsolenbauteil unterschiedliche Zonen aufweist, die jeweils auf verschiedene Funktionsziele abgestimmt sind. Erfindungsgemäß ist deshalb am Konsolenbauteil ein Kern aus einem formstabilen Material vorhanden, der mit einer Deckschicht aus einem weicheren Material bereichsweise bedeckt oder ummantelt ist. Insbesondere kann das Konsolenbauteil in der Art eines sogenannten Monosandwichteils ausgebildet sein. Durch geeignete Auswahl des Kernmaterials kann der Hersteller nun eine ausreichende Formstabilität des Konsolenbauteils gewährleisten. Gleichzeitig ist durch Kombination eines insbesondere geringfügig elastisch verformbaren Deckschichtmaterials gewährleistet, dass die gewünschte Anformbarkeit und Haptik erzielt wird. Weiterhin ergibt sich durch die erfindungsgemäße Konstruktion der Vorteil, dass durch die Reduktion des weichen Materialanteils unerwünschte Emissionen, d.h. insbesondere die Neigung zu Fading und Fogging, verringert wird.

Durch die Kombination eines weichen Deckschichtmaterials mit einem formstabilen Kernmaterial können Konsolenbauteile mit sehr weicher Außenoberfläche hergestellt werden, die bisher aufgrund der damit verbundenen geringen Formstabilität nicht möglich waren. Die Deckschicht des Konsolenbauteils kann insbesondere eine Härte von weniger als 45 Shore A, insbesondere eine Härte von weniger als 25 Shore A, aufweisen.

Welches Material zur Herstellung der Deckschicht gewählt wird, ist grundsätzlich beliebig. Als besonders geeignet haben sich weichelastische Polymere, insbesondere thermoplastische Elastomere, erwiesen.

Um eine gute Verankerung des Konsolenbauteils in der Aufnahme des Kraftfahrzeugs zu gewährleisten, bzw. um gute Anti-Rutsch-Eigenschaften zu erzielen, sollte die Außenoberfläche der Deckschicht einen hohen Reibkoeffizienten aufweisen. Außerdem ist eine sogenannte "Soft-Touch-Haptik" an der Außenoberfläche der Deckschicht vielfach erwünscht.

Die Anti-Rutsch-Eigenschaften des Konsolenbauteils können weiterhin auch dadurch verbessert werden, dass die Deckschicht eine genoppte Außenoberfläche aufweist.

Bei der Auswahl des Kernmaterials haben sich insbesondere formstabile Thermoplaste, beispielsweise Polypropylen oder Polypropylen-Copolymere, als geeignet erwiesen.

Um das Gewicht des Konsolenbauteils zu verringern bzw. eine Reduktion des notwendigen Rohstoffeinsatzes zu erzielen, ist es besonders vorteilhaft, wenn der Kern aus einem geschäumten Material besteht.

Eine Erhöhung der Formteilstabilität kann auch durch eine geeignete Formgebung des Konsolenbauteils erreicht werden. Es ist deshalb besonders vorteilhaft, wenn das Konsolenbauteil eine schalenartige Gestalt mit einem Boden und nach oben überstehenden Seitenwänden aufweist.

In welcher Weise das Einlegeteil fixiert wird, ist grundsätzlich beliebig. Dies kann insbesondere dadurch erfolgen, dass das Einlegeteil in die formkomplementäre Aufnahme herausnehmbar eingelegt wird.

Alternativ dazu kann das Konsolenbauteil auch mit Befestigungsmitteln, insbesondere Schrauben oder Clipsen, in der formkomplementären Aufnahme fixiert werden.

Eine Ausführungsform eines erfindungsgemäßen Konsolenbauteils ist in den Zeichnung schematisch dargestellt und wird nachfolgend beispielhaft erläutert.

Es zeigen:
- **Fig. 1**: ein erfindungsgemäßes Konsolenbauteil in perspektivischer Ansicht;
- **Fig. 2**: das Konsolenbauteil gemäß **Fig. 1** in Ansicht von oben;
- **Fig. 3**: das Konsolenbauteil gemäß **Fig. 1** in Ansicht von unten;
- **Fig. 4**: das Konsolenbauteil gemäß **Fig. 1** in seitlicher Ansicht;
- **Fig. 5**: das Konsolenbauteil gemäß **Fig. 1** in einem teilweisen Querschnitt.

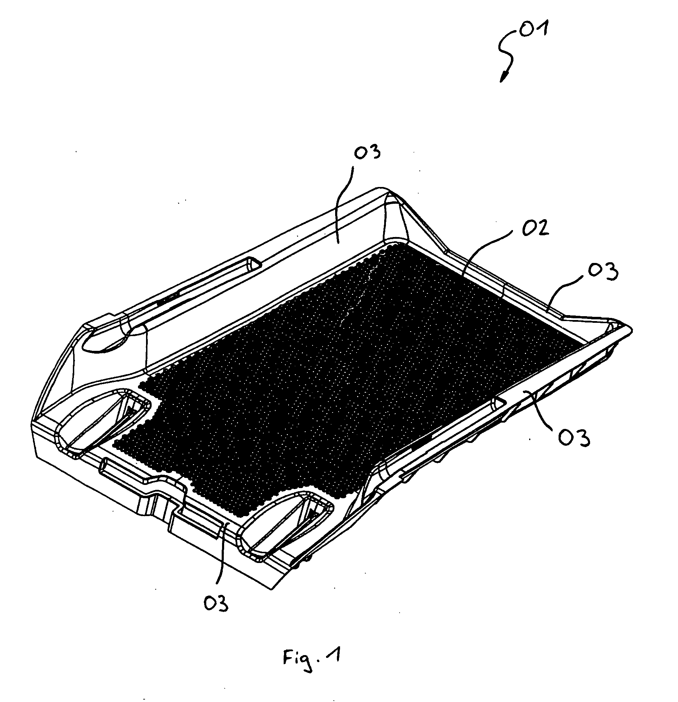

In **Fig. 1** ist ein Konsolenbauteil 01 perspektivisch dargestellt. Das Konsolenbauteil 01 ist zur herausnehmbaren Anordnung in einer Aufnahme eines Kraftfahrzeugs, nämlich im Handschuhfach eines Kraftfahrzeugs, vorgesehen. Die schalenartige Gestalt des Konsolenbauteils 01 mit einem Boden 02 und Seitenwänden 03 ist formkomplementär auf die Form der Aufnahme im Handschuhfach abgestimmt, so dass sich die Außenwandung des Konsolenbauteils 01 an der Innenseite des Handschuhfaches anlegen kann.

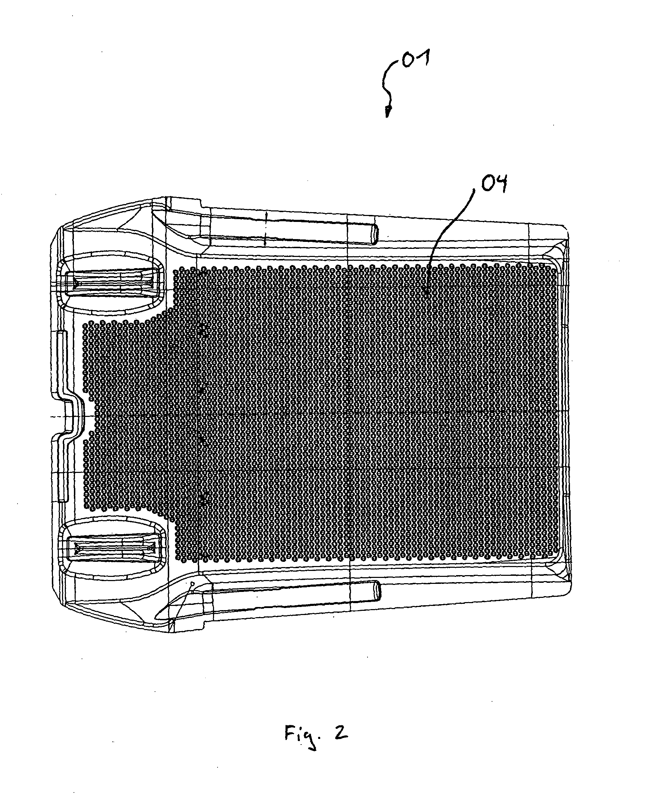

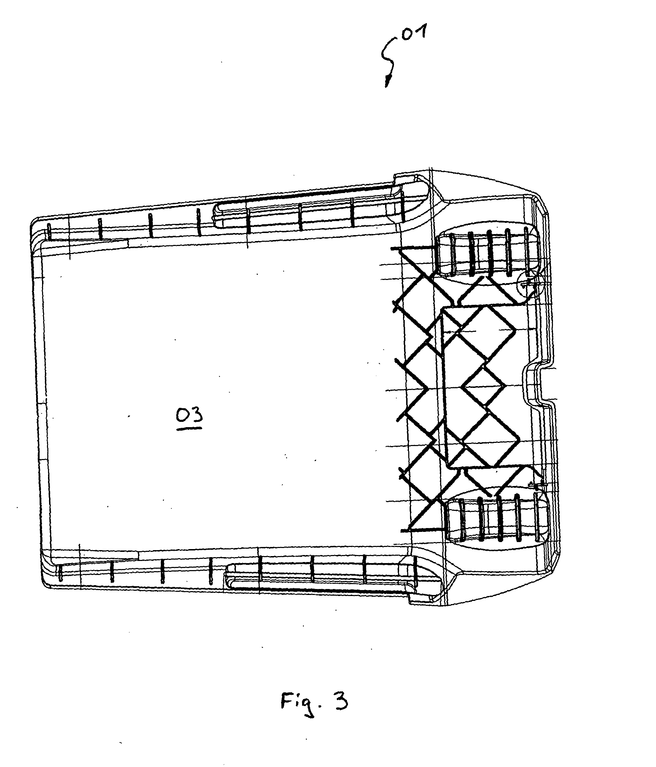

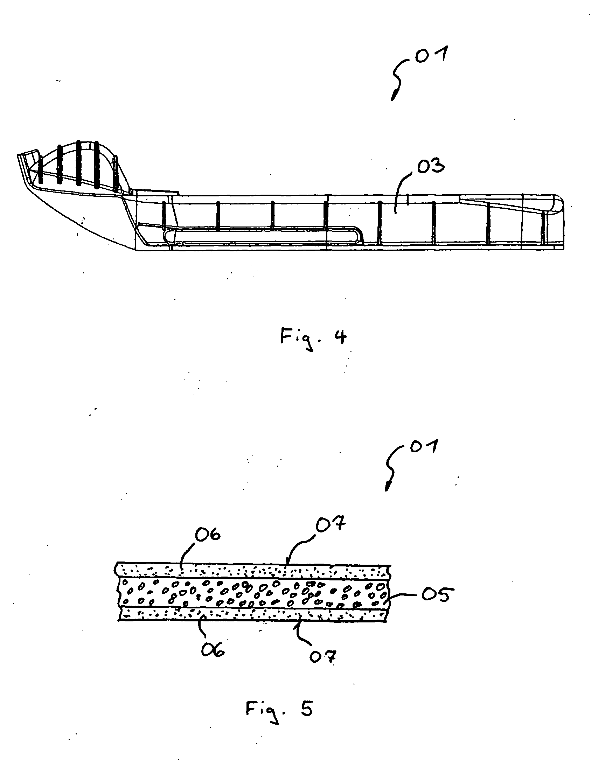

Wie aus **Fig. 2** ersichtlich ist, weist der Boden 02 eine genoppte Außenoberfläche 04 auf. Aus **Fig. 3** und **Fig. 4** ist die übrige geometrische Gestaltung des Konsolenbauteils 01 ersichtlich.

**Fig. 5** zeigt schematisch den sandwichartigen Aufbau des Konsolenbauteils 01 im Querschnitt. Ein Kern 05 aus geschäumtem Polypropylen verleiht dem Konsolenbauteil 01 eine hohe Formstabilität. Dieser Kern 05 ist allseitig mit einer Deckschicht 06 ummantelt. Die Deckschicht 06 ist elastisch verformbar und weist eine Härte von ungefähr 15 Shore A auf. Zur Herstellung der Deckschicht 06 wird ein thermoplastisches Elastomer eingesetzt. Durch entsprechende Auswahl des thermoplastischen Elastomers ist gewährleistet, dass die Außenoberfläche 07 des Konsolenbauteils 01 einen hohen Reibkoeffizienten und eine Soft-Touch-Haptik aufweist.

## Patentansprüche

1. Konsolenbauteil (01) zur Anordnung in einer formkomplementären Aufnahme eines Kraftfahrzeugs, insbesondere in einer Fahrzeugkonsole, in einem Handschuhfach oder in einem Ablagefach,
**dadurch gekennzeichnet,**
**dass** das Konsolenbauteil (01) einen Kern (05) aus einem formstabilen Material aufweist, der mit einer elastisch verformbaren Deckschicht (06) aus einem weicheren Material bereichsweise bedeckt oder ummantelt ist.

2. Konsolenbauteil nach Anspruch 1,
**dadurch gekennzeichnet,**
**dass** die Deckschicht (06) zumindest geringfügig elastisch verformbar ist.

3. Konsolenbauteil nach Anspruch 1 oder 2,
**dadurch gekennzeichnet,**
**dass** die Deckschicht (06) eine Härte von weniger als 45 Shore A, insbesondere von weniger als 25 Shore A, aufweist.

4. Konsolenbauteil nach einem der Ansprüche 1 bis 3,
**dadurch gekennzeichnet,**
**dass** die Deckschicht (06) aus einem weichelastischen Polymer, insbesondere einem thermoplastischen Elastomer, besteht.

5. Konsolenbauteil nach einem der Ansprüche 1 bis 4,
**dadurch gekennzeichnet,**
**dass** die Außenoberfläche (07) der Deckschicht (06) einen hohen Reibkoeffizienten aufweist.

6. Konsolenbauteil nach einem der Ansprüche 1 bis 5,
**dadurch gekennzeichnet,**
**dass** die Außenoberfläche (07) der Deckschicht (06) eine Soft-Touch-Haptik aufweist.

7. Konsolenbauteil nach einem der Ansprüche 1 bis 6,
**dadurch gekennzeichnet,**
**dass** die Deckschicht (06) zumindest bereichsweise als genoppte Außenoberfläche (04) ausgebildet ist.

8. Konsolenbauteil nach einem der Ansprüche 1 bis 7,
**dadurch gekennzeichnet,**
**dass** der Kern (05) aus einem formstabilen Thermoplast, insbesondere aus Polypropylen oder aus einem Polypropylen-Copolymer, besteht.

9. Konsolenbauteil nach einem der Ansprüche 1 bis 8,
**dadurch gekennzeichnet,**
**dass** der Kern (05) aus einem geschäumten Material besteht.

10. Konsolenbauteil nach einem der Ansprüche 1 bis 9,
**dadurch gekennzeichnet,**
**dass** das Konsolenbauteil (01) eine schalenartige Gestalt mit einem Boden (02) und nach oben überstehenden Seitenwänden (03) aufweist.

11. Konsolenbauteil nach einem der Ansprüche 1 bis 10,
**dadurch gekennzeichnet,**
**dass** das Konsolenbauteil (01) durch Einlegen in die formkomplementäre Aufnahme herausnehmbar fixiert ist.

12. Konsolenbauteil nach einem der Ansprüche 1 bis 11,
**dadurch gekennzeichnet,**
**dass** das Konsolenbauteil (01) mit Befestigungsmitteln, insbesondere Schrauben oder Clipsen, in der formkomplementären Aufnahme fixiert ist.
